# EUROPEAN PATENT SPECIFICATION

(11) **EP 2 392 106 B1**
(45) Date of publication and mention of the grant of the patent: **13.01.2016**
(21) Application number: 09839399.4
(22) Date of filing: 29.01.2009
(51) Int. Cl.: H04L 12/24, H04L 29/08, H04L 12/70, H04L 29/04

(54) **CONNECTING PORTS OF ONE OR MORE ELECTRONIC DEVICES TO DIFFERENT SUBSETS OF NETWORKS BASED ON DIFFERENT OPERATING MODES**
VERBINDUNG VON PORTS EINER ODER MEHRERER ELEKTRONISCHER EINRICHTUNGEN MIT VERSCHIEDENEN TEILMENGEN VON NETZWERKEN AUF DER BASIS VERSCHIEDENER BETRIEBSARTEN
CONNEXION DE PORTS D'UN OU PLUSIEURS DISPOSITIFS ÉLECTRONIQUES À DIFFÉRENTS SOUS-ENSEMBLES DE RÉSEAUX SUR LA BASE DE DIFFÉRENTS MODES DE FONCTIONNEMENT

(43) Date of publication of application: 07.12.2011
(73) Proprietor: Hewlett-Packard Development Company, L.P., Houston, TX 77070 (US)
(72) Inventor: KELLEY, Keith, L., Houston Texas 77070 (US); HUDSON, Charles, L., Austin Texas 78728 (US); HEMPHILL, John, M., Houston Texas 77070 (US)
(74) Representative: Lawman, Matthew John Mitchell
(86) International application number: PCT/US2009/032369
(87) International publication number: WO 2010/087826

(56) References cited:
- WO-A2-2004/031488
- KR-A- 20060 031 423
- US-A- 5 828 666
- US-A1- 2006 010 227
- US-A1- 2006 036 847
- US-A1- 2006 174 000
- US-A1- 2006 174 000
- US-A1- 2006 209 773
- US-A1- 2008 247 405

## Description

### Background

Enterprises such as companies, educational organizations, government agencies, and so forth, are increasingly using concentrated arrangements of equipment, which can be in the form of equipment racks containing multiple servers, storage devices, communications devices, or other types of electronic devices. A challenge associated with use of an equipment rack is that the equipment rack may include a relatively large number of electronic devices that have to be connected to external networks, including local area networks (LANs), wide area networks (WANs), storage area networks (SANs), and so forth. Connecting a relatively large number of electronic devices to external networks may involve the use of a relatively large number of cables, which can be unwieldy and can lead to increased faults and points of failure.

To reduce the amount of cables used to connect electronic devices in an equipment rack to external networks, one or more modules that provide an abstraction layer can be connected between the equipment rack and the external networks. Examples of such modules include virtual connect modules provided by the Hewlett-Packard Company.

A virtual connect module can be configured by an administrator to connect ports of electronic devices in the equipment rack with selected networks, which can include LANs, WANs, SANs, and/or other types of networks. However, once the connections between ports of a particular electronic device and a set of external networks is configured, no convenient mechanism has been provided to change the connection of the ports of the particular electronic device to the external networks.

US2005/828666 A describes a multi-service access platform which permits the formation of a universal service network encompassing a plurality of telecommunication networks.

US2006/0174000 A1 describes a system for automatic verification of a network access control construct for a network switch.

US2008/0247405 A1 describes an apparatus for assigning a device to a network zone.

WO2004/031488 A1 describes a system of smart connection management for a portable device in a portable environment on wireless networks.

### Brief Description Of The Drawings

Some embodiments of the invention are described, by way of example, with respect to the following figures:
Fig. 1 is a schematic diagram of an exemplary arrangement that includes a connection mechanism that allows network ports of electronic devices to be connected to different subsets of networks depending upon the operating modes of the electronic devices, in accordance with some embodiments;
Fig. 2 illustrates a mode-based profile used for connecting network ports of an electronic device to networks, according to an embodiment; and
Fig. 3 is a flow diagram of a process of dynamically changing network connections of an electronic device based upon the operating mode of the network device, in accordance with an embodiment.

### Detailed Description

In accordance with some embodiments of the invention, a connection mechanism is provided to dynamically change connections of network ports of an electronic device to networks, depending on the operating mode of the electronic device. An "electronic device" can be a computer, a storage device, a communications device, or any other type of device that has network ports for connection to respective one or more networks. The networks to which the network ports of the electronic device can be connected include local area networks (LANs), wide area networks (WANs), storage area networks (SANs), and/or other types of networks.

A "network port" of an electronic device refers to an interface (implemented with hardware and/or software) of the electronic device that is able to communicate with a respective network if properly connected. Connections between the network ports of an electronic device and networks can be specified by one or more mode-based profiles that are applicable to the electronic device. The one or more mode-based profiles can specify that the network ports of the electronic device are to be connected to a first subset of networks for a first operating mode of the electronic device, and to a second, different subset of networks for a second, different operating mode of the electronic device.

In one specific example, a first operating mode of the electronic device is when the electronic device is booting or initializing during power up or reset. During boot or initialization, the electronic device may have to access a remotely stored boot image that is located in a first network, where the boot image is used to boot the electronic device. After the electronic device has successfully booted, the electronic device may access a second, different network during normal operation of the electronic device. Thus, the two operating modes in the example above include a boot mode and a non-boot (or normal) mode. Other examples of operating modes are contemplated in other implementations.

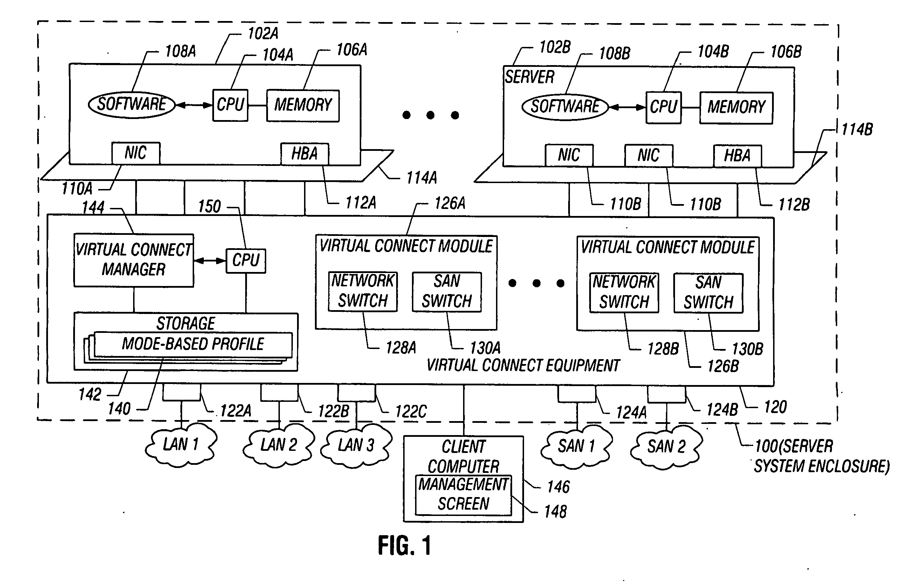

Fig. 1 illustrates an exemplary arrangement that includes a server system enclosure 100 containing multiple server computers 102A, 102B. In the ensuing discussion, reference is made to server computers (or more simply "servers"), which are computers having resources (e.g., software applications, database applications, etc.) that are accessible by remotely located client computers. The server computers can be blade servers or non-blade servers. Although the following discussion refers to racks containing servers (e.g., blade servers), it is noted that techniques according to some embodiments are applicable to other types of electronic devices, such as other types of computers, storage devices, communications devices, and so forth.

The server system enclosure 100 can be in the form of a rack having multiple bays to receive respective servers. The server 102A is received in a first bay 114A of the server system enclosure 100, while the server 102B is received in a second bay 114B of the server system enclosure 100. The bays of the server system enclosure 100 can be defined by slots or other types of receptacles for receiving respective servers. Although just two servers are depicted in Fig. 1, it is noted that in a different implementation, just one server can be provided, or more than two servers can be provided. The dashed box in Fig. 1 represents an external housing of the server system enclosure 100 that defines an inner chamber in which the servers 102A, 102B are mounted.

The server 102A includes one or more central processing units (CPUs) 104A that are connected to memory 106A. Software 108A is executable on the CPU(s) 104A. The server 102A also includes various network ports. In the example of Fig. 1, the server 102A includes a network interface controller (NIC) 110A and a host bus adapter 112A. The NIC 110A is used to allow the server 102A to communicate over one of LANs 1,2, and 3 in the example of Fig. 1. The NIC 110A constitutes a first type of network port.

Another type of network port is the host bus adapter 112A, which is used to access certain types of networks, such as a storage area network (SAN), which can be either SAN 1 or SAN 2 depicted in Fig. 1. SAN 1 or SAN 2 can be a Fibre Channel network, a SCSI (Small Computer System Interface) network, or other type of storage network, such as a Fibre Channel over Ethernet (FCoE) storage network, a Serial-Attached SCSI (SAS) storage network, and so forth. Although just one NIC 110A and one host bus adapter 112A are depicted, it is noted that in other implementations, the server 102A can include more than one NIC or more than one host bus adapter to connect to corresponding networks.

The server 102B similarly includes one or more CPUs 104B connected to memory 106B. Software 108B is executable on the CPU(s) 104B. In the example of Fig. 1, the server 102B includes NICs 110B and a host bus adapter 112B.

The server system enclosure 100 also includes virtual connect equipment 120, which provides a mechanism to selectively connect network ports of the servers 102A, 102B (including NICs 110A, 110B and host bus adapters 112A, 112B) to external network ports 122A, 122B, and 122C and network ports 124A, 124B. The external network ports 122A-122C are connected to respective local area networks (LAN 1, LAN 2, and LAN 3), whereas the external network ports 124A, 124B are connected to respective storage networks (SAN 1 and SAN 2).

The virtual connect equipment 120 provides an abstraction layer between the servers 102A, 102B and the external networks (LANs 1-3 and SANs 1-2). The virtual connect equipment 120 includes one or more virtual connect modules 126 (126A, 126B) depicted to configurably connect the network ports of the servers 102A, 102B to the external network ports 122A-122C and 124A-124B. Each virtual connect module includes a network switch 128A or 128B and a SAN switch 130A or 130B. The network switch 128A or 128B is used to connect NICs 110A, 110B to respective LANs 1-3, whereas the SAN switch 130A-130B is used to configurably connect the host bus adapters 112A, 112B to SAN 1-2.

The specific connections between the network ports of a given server 102A or 102B and a corresponding subset of the external networks (where a "subset" refers to either all or less than all of the available networks to which the servers can connect) are specified by a corresponding mode-based profile 140 that is stored in a storage 142 in the virtual connect equipment 120. The mode-based profile 140 can be defined for a particular bay (114A or 114B) of the server system enclosure 100, such that any server connected to that specific bay will be connected to the external networks according to the settings of the profile 140. Multiple mode-based profiles 140 can be stored in the storage 142 for multiple corresponding bays of the server system enclosure 100. In a different implementation, instead of associating a profile 140 with a specific bay, the profile can be associated with a specific server.

A mode-based profile 140 can define different network connections for different operating modes of the corresponding server. For example, the mode-based profile 140 can specify that the NIC 110A of server 102A is to be connected to LAN 1 for a first mode of operation, and to be connected to LAN 2 for a second mode of operation. Similarly, the mode-based profile 140 can specify that the host bus adapter 112A of the server 102A is to be connected to SAN 1 for a first mode of operation, and to SAN 2 for a second mode of operation. Another mode-based profile 140 can specify configurable connections between the network ports of the server 102B and the networks LAN 1-3 and SAN 1-2 according to different operating modes.

Note that not every network port has to be connected to a corresponding network in every mode. For example, mode 1 may specify that just one network connection be made (such as a NIC to a LAN or a host bus adapter to a SAN), while mode 2 may specify that several network connections be made between network ports and respective networks. Note also that there may be modes in which no network and/or storage connection is provided.

In the discussion above, it is assumed that a mode-based profile 140 can specify multiple modes and respective different network connections according to the different modes. In a different implementation, one profile per mode per bay or server can be specified, where each such profile specifies just one mode and the corresponding network connections.

The content of the mode-based profile 140 can be generated by a virtual connect manager 144 in the virtual connect equipment 120. An administrator can remotely access the virtual connect manager 144 using a client computer 146. The virtual connect manager 144 can provide an application programming interface (API) or web-based interface to allow the client computer 146 to present a management screen 148 that is displayed in a display device of the client computer 146. Using the management screen 148, the administrator can specify the number of modes to be included in a profile 140, and the network connections for each mode.

The virtual connect manager 144 can be a software module executable on one or more CPUs 150 of the virtual connect equipment 120. Although depicted as being external to the virtual connect modules 126A, 126B, it is noted that the virtual connect manager 144, CPU(s) 150, and/or storage 142 can be incorporated in one or more of the virtual connect modules 126A, 126B.

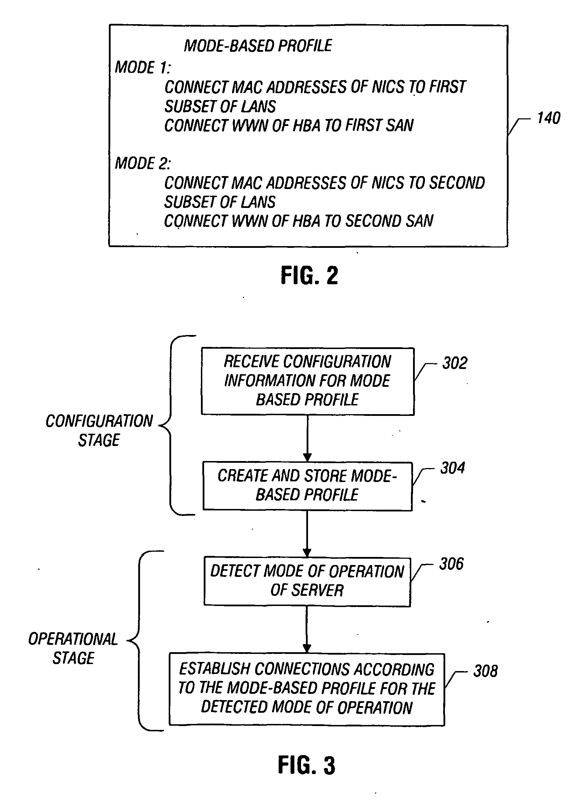

An exemplary mode-based profile 140 is depicted in Fig. 2, which specifies different network connections for different modes (mode 1 and mode 2). In mode 1, the MAC (media access control) addresses of respective NICs of a particular server are specified as being connected to a first subset of LANs, while a worldwide name (WWN) of a host bus adapter is specified as being connected to a first SAN. In mode 2, the mode-based profile 140 specifies that the MAC addresses of the NICs are connected to a second subset of LANs, while the WWN of the host bus adapter is connected to a second SAN.

In an alternative implementation, the mode-based profile can specify that the host bus adapter is connected to the same SAN for the different modes (such that the host bus adapter is connected to the same SAN in either mode 1 or mode 2). Alternatively, the mode-based profile can specify that the host bus adapters are connected to different SANs in different modes, but to the same LAN in the different modes.

Fig. 3 illustrates a procedure according to an embodiment of the invention. The procedure of Fig. 3 includes a configuration stage and an operational stage. In the configuration stage, the virtual connect manager 144 receives (at 302) configuration information for a mode-based profile that is defined for a particular bay or server. The configuration information can be received from the client computer 146, or alternatively, the configuration information can be predefined and loaded in the virtual connect equipment 120.

As part of the configuration stage, the virtual connect manager 144 creates (or updates) and stores (at 304) the mode-based profile based on the received configuration information.

During the operational stage, the virtual connect modules 126A, 126B detect (at 306) the mode of operation of a particular server. Based on the detected mode of operation, the virtual connect module 126A and/or 126B establishes (at 308) connections according to the corresponding mode-based profile 140 that is retrieved from the storage 140 shown in Fig. 1. Thus, for example, during a boot mode, the virtual connect module 126A and/or 126B can cause the NIC 110A of the server 102A to connect to LAN 1 to retrieve a boot image stored on a device in LAN 1. The boot image is used to boot the server 102A and to load the appropriate software into the server 102A. Next, after boot, during the normal operating mode, the virtual connect module 126A and/or 126B can cause the NIC 110A to connect to LAN 3 to access devices on LAN 3, such as storage devices, web servers, and so forth.

Using mechanisms according to some embodiments, changing connections for different modes is simplified, repeatable, and reliable. Dynamically changing connections according to different modes can be performed in a secure manner, since the profiles 140 can be made to be updateable by users with a higher security privilege.

Instructions of software described above (including the virtual connect manager 144 of Fig. 1) are loaded for execution on a processor (such as one or more CPUs 150 in Fig. 1). The processor includes microprocessors, microcontrollers, processor modules or subsystems (including one or more microprocessors or microcontrollers), or other control or computing devices. A "processor" can refer to a single component or to plural components (e.g., one CPU or multiple CPUs).

Data and instructions (of the software) are stored in respective storage devices, which are implemented as one or more computer-readable or computer-usable storage media. The storage media include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact disks (CDs) or digital video disks (DVDs). Note that the instructions of the software discussed above can be provided on one computer-readable or computer-usable storage medium, or alternatively, can be provided on multiple computer-readable or computer-usable storage media distributed in a large system having possibly plural nodes. Such computer-readable or computer-usable storage medium or media is (are) considered to be part of an article (or article of manufacture). An article or article of manufacture can refer to any manufactured single component or multiple components.

## Claims

1. A virtual connect equipment (120) providing an abstraction layer to flexibly connect network ports (110,112) of one or more electronic devices (102) to one or more external network ports (122,124) of one or more external networks, said virtual connect equipment comprising:
at least one virtual connect module (126) arranged to configurably connect network ports (110, 112) of the one or more electronic devices (102) to network ports (122, 124) that are connected to respective networks; and
a virtual connect manager (144) arranged, in a configuration stage, to receive configuration information for a mode-based profile that is defined for a particular electronic device and to create or update, and store, at least one profile (140) for the particular one of the one or more electronic devices (102), wherein the at least one profile (140) specifies that the particular electronic device is to be connected to different subsets of the external networks for corresponding different modes of operation of the particular electronic device; and
wherein, in an operational stage the at least one virtual connect module is arranged to detect the mode of operation of a particular one of the one or more electronic devices (102) and based on the detected mode of operation, retrieve the corresponding mode based profile (140) from storage and establish connection to the one or more external networks according to the retrieved mode-based profile (140).

2. The virtual connect equipment (120) of claim 1,
wherein the at least one virtual connect module (126) is arranged to:
detect that the particular electronic device is in a first mode of operation;
connect the network ports of the particular electronic device to a first one of the different subsets of the external networks for the first mode of operation;
detect that the particular electronic device is in a second mode of operation;
connect the network ports of the particular electronic device to a second one of the different subsets of the external networks for the first mode of operation.

3. The virtual connect equipment (120) of claim 1, wherein the networks comprise plural local area networks and plural storage networks, wherein each of the electronic devices (102) includes at least one first network port for connection to a respective one or more of the local area networks, and wherein each of the electronic devices (102) includes at least one second network port for connection to a respective one or more of the storage networks.

4. The virtual connect equipment (120) of claim 3, wherein the at least one profile (140) specifies that a media access control (MAC) address of the first network port of the particular electronic device is to be connected to different local area networks for the different modes of operation.

5. The virtual connect equipment (120) of claim 3, wherein the at least one profile (140) specifies that a world wide name of the second network port of the particular electronic device is to be connected to different storage networks for the different modes of operation.

6. The virtual connect equipment (120) of claim 1, wherein the virtual connect manager (144) is to further cause a management screen to be displayed to allow a user to create the at least one profile (140).

7. The virtual connect equipment (120) of claim 6, wherein the at least one virtual connect module (126) comprises a local area network switch (128) and a storage network switch (130).

8. The virtual connect equipment (120) of claim 1, wherein the at least one virtual connect module (126) is to connect the network ports of the electronic devices (102) mounted in an equipment enclosure (100) to the networks.

9. The virtual connect equipment (120) of claim 1 wherein the one or more electronic devices are server computers.

10. A method of flexibly connecting one or more electronic devices (102) to one or more external network ports (122, 124) of one or more networks, said method the steps of:
connecting, with virtual connect equipment (120), network ports (110, 112) of the one or more electronic devices (102) to the external networks;
in a configuration stage, creating or updating, and storing, in the virtual connect equipment, at least one profile (140) that specifies that the network ports of a particular one of the one or more electronic devices (102) are to be connected to different subsets of the external networks for different operating modes of the particular electronic device;
in an operational stage, detecting an operating mode of the particular electronic device (102); and
connecting the network ports of the particular electronic device to one of the different subsets of the networks in response to the detected mode of operation, based on accessing the at least one profile (140).

11. The method of claim 10, wherein connecting the network ports of the particular electronic device (102) to one of the different subsets of the networks comprises connecting at least one first network port of the particular electronic device (102) to respective one or more local area networks, and connecting at least one second network port of the particular electronic device to respective one or more storage networks.

12. The method of claim 10, further comprising: storing, in the connection equipment, at least a second profile that specifies that network ports of a second one of the electronic devices (102) are to be connected to different subsets of the networks for different operating modes of the second electronic device.

13. A computer-readable storage medium containing instructions that when executed by the virtual connect equipment of claim 1, cause said virtual connect equipment (120) to:
receive information relating to connections of network ports (122,124) of an electronic device to networks, wherein the virtual connect equipment (120) includes at least one virtual connect module (126) to connect the network ports of the electronic device to the networks; and
create or update, and store, at least one profile in response to the received information, wherein the at least one profile specifies that the network ports of the electronic device are to be connected by the virtual connect equipment (120) to different subsets of the networks for different operating modes of the electronic device.

## Patentansprüche

1. Virtuelle Verbindervorrichtung (120), bereitstellend eine Abstraktionsschicht zum flexiblen Verbinden von Netzwerkports (110, 112) einer oder mehrerer elektronischer Einrichtungen (102) mit einem oder mehreren externen Netzwerkports (122, 124) eines oder mehrerer externer Netzwerke, wobei die virtuelle Verbindervorrichtung Folgendes umfasst:
mindestens ein virtuelles Verbindermodul (126), derart angeordnet, dass es Verbinderports (110, 112) der einen oder mehreren elektronischen Einrichtungen (102) mit Netzwerkports (122, 124), die mit entsprechenden Netzwerken verbunden sind, konfigurierbar verbindet; und
virtuelle Verbinderverwaltungseinrichtung (144), in einer Konfigurierungsphase derart angeordnet, dass sie Konfigurationsinformationen für ein modusbasiertes Profil empfängt, definiert für eine jeweilige elektronische Einrichtung und zum Erstellen oder Aktualisieren, und Speichern, mindestens eines Profils (140) für die jeweilige der einen oder mehreren elektronischen Einrichtungen (102), wobei das mindestens eine Profil (140) vorgibt, dass die jeweilige elektronische Einrichtung mit verschiedenen Teilmengen der externen Netzwerke für entsprechende verschiedene Betriebsarten der jeweiligen elektronischen Einrichtung zu verbinden ist; und
wobei das mindestens eine virtuelle Verbindermodul in einer Betriebsphase zum Detektieren der Betriebsart einer jeweiligen der einen oder mehreren elektronischen Einrichtungen (102) und auf Grundlage der detektierten Betriebsart, Abrufen des entsprechenden modusbasierten Profils (140) vom Speicher und Herstellen einer Verbindung mit dem einen oder mehreren externen Netzwerke gemäß dem abgerufenen modusbasierten Profil (140).

2. Virtuelle Verbindervorrichtung (120) nach Anspruch 1,
wobei das mindestens eine virtuelle Verbindermodul (126) zu Folgendem angeordnet ist:
Detektieren, dass sich die jeweilige elektronische Einrichtung in einer ersten Betriebsart befindet;
Verbinden der Netzwerkports der jeweiligen elektronischen Einrichtung mit einer ersten der verschiedenen Teilmengen der externen Netzwerke für die erste Betriebsart;
Detektieren, dass sich die jeweilige elektronische Einrichtung in einer zweiten Betriebsart befindet;
Verbinden der Netzwerkports der jeweiligen elektronischen Einrichtung mit einer zweiten der verschiedenen Teilmengen der externen Netzwerke für die erste Betriebsart.

3. Virtuelle Verbindervorrichtung (120) nach Anspruch 1, wobei die Netzwerke mehrere Nahbereichsnetze und mehrere Speichernetze umfassen, wobei jede der elektronischen Einrichtungen (102) mindestens einen ersten Netzwerkport zum Verbinden mit einem oder mehreren entsprechenden der Nahbereichsnetze umfasst, und wobei jede der elektronischen Einrichtungen (102) mindestens einen zweiten Netzwerkport mit einem oder mehreren entsprechenden der Speichernetze umfasst.

4. Virtuelle Verbindervorrichtung (120) nach Anspruch 3, wobei das mindestens eine Profil (140) vorgibt, dass eine Medienzugriffssteuerungs- (MAC-) Adresse des ersten Netzwerkports der jeweiligen elektronischen Einrichtung mit verschiedenen Nahbereichsnetzen für die verschiedenen Betriebsarten zu verbinden ist.

5. Virtuelle Verbindervorrichtung (120) nach Anspruch 3, wobei das mindestens eine Profil (140) vorgibt, dass ein World Wide Name des zweiten Netzwerkports der jeweiligen elektronischen Einrichtung mit verschiedenen Speichernetzen für die verschiedenen Betriebsarten zu verbinden ist.

6. Virtuelle Verbindervorrichtung (120) nach Anspruch 1, wobei die virtuelle Verbindemerwaltungseimichtung (144) ferner einen Verwaltungsbildschirm veranlassen soll, angezeigt zu werden, um einem Anwender zu ermöglichen, das mindestens eine Profil (140) zu erstellen.

7. Virtuelle Verbindervorrichtung (120) nach Anspruch 6, wobei das mindestens eine virtuelle Verbindermodul (126) einen Nahbereichsnetzvermittler (128) und einen Speichernetzvermittler (130) umfasst.

8. Virtuelle Verbindervorrichtung (120) nach Anspruch 1, wobei das mindestens eine virtuelle Verbindermodul (126) die Netzwerkports der elektronischen Eimichtungen (102), angebracht in einem Vorrichtungsgehäuse (100), mit den Netzwerken verbinden soll.

9. Virtuelle Verbindervorrichtung (120) nach Anspruch 1, wobei die eine oder mehrere elektronische Einrichtungen Serverrechner sind.

10. Verfahren zum flexiblen Verbinden einer oder mehrerer elektronischer Einrichtungen (102) mit einem oder mehreren externen Netzwerkports (122, 124) von einem oder mehreren Netzwerken, wobei das Verfahren folgende Schritte umfasst:
Verbinden, mit der virtuellen Verbindervorrichtung (120), der Netzwerkports (110, 112) der einen oder mehreren elektronischen Einrichtungen (102) mit den externen Netzwerken;
in einer Konfigurationsphase, Erstellen oder Aktualisieren, und Speichern, in der virtuellen Verbindervorrichtung, mindestens eines Profils (140), das vorgibt, dass die Netzwerkports einer jeweiligen der einen oder mehreren elektronischen Einrichtungen (102) mit verschiedenen Teilmengen der externen Netzwerke für verschiedene Betriebsarten der jeweiligen elektronischen Einrichtung zu verbinden sind;
in einer Betriebsphase, Detektieren einer Betriebsart der jeweiligen elektronischen Einrichtung (102); und
Verbinden der Netzwerkports der jeweiligen elektronischen Einrichtung mit einer der verschiedenen Teilmengen der Netzwerke in Reaktion auf die detektierte Betriebsart, beruhend auf dem Zugreifen auf das mindestens eine Profil (140).

11. Verfahren nach Anspruch 10, wobei das Verbinden der Netzwerkports der jeweiligen elektronischen Einrichtung (102) mit einer der verschiedenen Teilmengen der Netzwerke ein Verbinden mindestens eines ersten Netzwerkports der jeweiligen elektronischen Einrichtung (102) mit einem oder mehreren entsprechenden Nahbereichsnetze, und ein Verbinden mindestens eines zweiten Netzwerkports der jeweiligen elektronischen Einrichtung mit einem oder mehreren entsprechenden Speichernetzen umfasst.

12. Verfahren nach Anspruch 10, ferner Folgendes umfassend: Speichern, in der Verbindungseinrichtung, mindestens eines zweiten Profils, das vorgibt, dass Netzwerkports einer zweiten der elektronischen Einrichtungen (102) mit verschiedenen Teilmengen der Netzwerke für verschiedene Betriebsarten der zweiten elektronischen Einrichtung zu verbinden sind.

13. Rechnerlesbares Speichermedium, enthaltend Instruktionen, die, wenn durch die virtuelle Verbindervorrichtung nach Anspruch 1 ausgeführt, die virtuelle Verbindervorrichtung (120) zu Folgendem veranlassen:
Empfangen von Informationen in Bezug auf Verbindungen von Netzwerkports (122, 124) einer elektronischen Einrichtung mit Netzwerken, wobei die virtuelle Verbindervorrichtung (120) mindestens ein virtuelles Verbindermodul (126) zum Verbinden der Netzwerkports der elektronischen Einrichtung mit den Netzwerken umfasst; und
Erstellen oder Aktualisieren, und Speichern, mindestens eines Profils in Reaktion auf die empfangenen Informationen, wobei das mindestens eine Profil vorgibt, dass die Netzwerkports der elektronischen Einrichtung durch die virtuelle Verbindervorrichtung (120) mit verschiedenen Teilmengen der Netzwerke für verschiedene Betriebsarten der elektronischen Einrichtung zu verbinden sind.

## Revendications

1. Équipement de connexion virtuelle (120) fournissant une couche d'abstraction pour connecter de façon souple des ports de réseau (110, 112) d'un ou plusieurs appareils électroniques (102) à un ou plusieurs ports de réseaux externes (122, 124) d'un ou plusieurs réseaux externes, ledit équipement de connexion virtuelle comprenant :
au moins un module de connexion virtuelle (126) conçu pour connecter de façon configurable des ports de réseaux (110, 112) d'un ou plusieurs appareils électroniques (102) à des ports de réseaux (122, 124) connectés à leurs réseaux respectifs ; et
un gestionnaire de réseau virtuel (144) conçu, dans une étape de configuration, pour recevoir des informations de configuration pour un profil fondé sur le mode qui est défini pour un appareil électronique particulier, et pour créer ou actualiser et stocker au moins un profil (140) pour celui en particulier du ou des appareils électroniques (102), dans lequel le ou les profils (140) spécifie que l'appareil électronique particulier doit être connecté à différents sous-réseaux des réseaux externes pour mettre en correspondance différents modes de fonctionnement de l'appareil électronique particulier ; et
dans lequel, dans une étape de fonctionnement, le ou les modules de connexion virtuels sont conçus pour détecter le mode de fonctionnement d'un ou plusieurs appareils électroniques (102) particuliers et, en fonction du mode de fonctionnement détecté, extraire le profil basé sur le mode correspondant (140) dans le stockage et établir une connexion au un ou plusieurs réseaux selon le profil basé sur le mode extrait (140).

2. Équipement de connexion virtuel (120) selon la revendication 1, dans lequel ledit module de connexion virtuelle (126) est conçu pour :
détecter que l'appareil électronique particulier est dans un premier mode de fonctionnement ;
connecter les ports de réseaux de l'appareil électronique particulier à un premier des différents sous-réseaux des réseaux externes pour le premier mode de fonctionnement ;
détecter que l'appareil électronique particulier est dans un deuxième mode de fonctionnement ;
connecter les ports de réseaux de l'appareil électronique particulier à un deuxième des différents sous-réseaux des réseaux externes pour le premier mode de fonctionnement.

3. Équipement de connexion virtuel (120) selon la revendication 1, dans lequel les réseaux comprennent plusieurs réseaux locaux et plusieurs réseaux de stockage, dans lesquels chacun des appareils électroniques (102) inclut au moins un premier port de réseau pour une connexion à un ou plusieurs réseaux locaux, et dans lesquels chacun des appareils électroniques (102) inclut au moins un deuxième port de réseau pour une connexion à un ou plusieurs réseaux de stockage respectifs.

4. Équipement de connexion virtuel (120) selon la revendication 3 dans lequel ledit profil (140) spécifie qu'une adresse de contrôle d'accès média (MAC) du premier port de réseau de l'appareil électronique particulier doit être connectée à différents réseaux locaux pour les différents modes de fonctionnement.

5. Équipement de connexion virtuel (120) selon la revendication 3 dans lequel ledit profil (140) spécifie qu'un World Wide Name du deuxième port de réseau de l'appareil électronique particulier doit être connecté à différents réseaux de stockage pour les différents modes de fonctionnement.

6. Équipement de connexion virtuel (120) selon la revendication 1 dans lequel le gestionnaire de réseau virtuel (144) doit provoquer en outre l'affichage d'un écran de gestion pour permettre à un utilisateur de créer ledit profil (140).

7. Équipement de connexion virtuel (120) selon la revendication 6 dans lequel ledit module de connexion virtuelle (126) comprend un interrupteur réseau local (128) et un interrupteur réseau de stockage (130).

8. Équipement de connexion virtuel (120) selon la revendication 1 dans lequel ledit module de connexion virtuelle (126) doit se connecter aux ports de réseaux des appareils électroniques (102) montés dans une enceinte d'équipement (100) aux réseaux.

9. Équipement de connexion virtuel (120) selon la revendication 1 dans lequel ledit équipement électronique est un ordinateur de serveur.

10. Procédé pour connecter de façon souple un ou plusieurs appareils électroniques (102) à un ou plusieurs ports de réseaux externes (122, 124) d'un ou plusieurs réseaux, ledit procédé comprenant les étapes de :
connecter, avec un équipement de connexion virtuelle (120) des ports de réseaux (110, 112) d'un ou plusieurs appareils électroniques (102) aux réseaux externes ;
dans une étape de configuration, créer ou actualiser et stocker, dans un équipement de connexion virtuelle, au moins un profil (140) qui spécifie que les ports de réseaux d'un particulier d'un ou plusieurs appareils électroniques (102) doivent être connectés à différents sous-réseaux des réseaux externes pour différents modes de fonctionnement de l'appareil électronique particulier ;
dans une étape opérationnelle, détecter un mode de fonctionnement d'un appareil électronique particulier (102) ;
connecter les ports de réseaux de l'appareil électronique particulier à un des différents sous-réseaux des réseaux en réponse au mode de fonctionnement détecté en se fondant sur l'accès audit dernier profil (140).

11. Procédé selon la revendication 10 dans lequel connecter les ports de réseaux de l'appareil électronique particulier (102) à un des différents sous-réseaux des réseaux comprend de connecter au moins un premier port de réseau de l'appareil électronique particulier (102) à un ou plusieurs réseaux locaux respectifs, et de connecter au moins un deuxième port de réseau de l'appareil électronique particulier à un ou plusieurs réseaux de stockage respectifs.

12. Procédé selon la revendication 10 comprenant en outre : de stocker, dans l'équipement de connexion, au moins un deuxième profil qui spécifie que les ports de réseaux d'un deuxième parmi les appareils électroniques (102) doivent être connectés à différents sous-réseaux des réseaux pour différents modes de fonctionnement du deuxième appareil électronique.

13. Support d'informations lisible par un ordinateur, contenant des instructions qui, quand elles sont exécutées par l'équipement de connexion virtuelle de la revendication 1, amène ledit équipement de connexion virtuelle (120):
à recevoir des informations concernant des connexions à des ports de réseaux (122, 124) d'un appareil électronique à des réseaux, dans lequel l'équipement de connexion virtuelle (120) inclut au moins un module de connexion virtuelle (126) pour connecter les ports de réseaux de l'appareil électronique aux réseaux ; et
à créer ou actualiser et stocker au moins un profil en réponse aux informations reçues, dans lequel ledit profil spécifie que les ports de réseaux de l'appareil électronique doivent être connectés par l'équipement de connexion virtuelle (120) à différents sous-réseaux des réseaux pour différents modes de fonctionnement de l'appareil électronique.
